# FASCICULE DE BREVET EUROPEEN

(11) **EP 0 637 115 B1**
(45) Date de publication et mention de la délivrance du brevet: **30.10.1996**
(21) Numéro de dépôt: 94420217.5
(22) Date de dépôt: 26.07.1994
(51) Int. Cl.: H02G 9/06, H02G 1/08

(54) **Conduit de protection à friction réduite**
Reibungsarmes Schutzrohr
Protective conduit with reduced friction

(30) Priorité: 28.07.1993 FR 9309519
(43) Date de publication de la demande: 01.02.1995
(73) Titulaire: ETABLISSEMENTS COURANT SA, F-01570 Manziat (FR)
(72) Inventeur: Courant, Alain, F-01570 Manziat (FR)
(74) Mandataire: Perrier, Jean-Pierre

(56) Documents cités:
- EP-A- 0 221 481
- DE-A- 2 062 695
- FR-A- 2 642 234
- US-A- 2 189 207
- US-A- 4 892 442

## Description

L'invention concerne des conduits de protection à friction réduite pour conducteurs électriques.

Pour protéger les conducteurs électriques devant être enfouis dans le sol, il est connu de les disposer dans des conduits tubulaires en matière synthétique, rigide ou semi rigide, et formés par assemblage bout à bout de tronçons.

Ces tronçons sont mis en place au fond d'une tranchée ou dans un tunnel réalisé par une sous-soleuse. Lorsqu'ils sont assemblés, ils forment un conduit continu s'étendant sur une longueur allant de 1000 à 2000 mètres.

Après mise en place des tronçons, les conducteurs sous gaine sont introduits dans le conduit ainsi obtenu et sont tirés sur toute sa longueur. Si cette opération ne pose pas de problème pour les conducteurs métalliques de forte section, il n'en est pas de même pour les fibres optiques et les câbles de télécommunication qui, en raison de leur moins bonne résistance à la traction peuvent se rompre lors du tirage avec les inconvénients qui en résultent, sur le coût et la durée du chantier.

Pour remédier à cela, il est connu d'adjoindre aux fibres sous gaine au moins un fil métallique servant au tirage du faisceau dans le conduit. Ce fil augmente le coût du faisceau.

On connaît par US-A- 2189 207 et US-A-4 892 442 et FR-A-2 642 234, des conduits comportant des nervures circulaires internes et par DE-A-2 062 695 un conduit comportant des nervures internes hélicoïdales, lesdites nervures formant des portées de contact qui, espacées longitudinalement, réduisent la surface en contact avec les conducteurs et, en conséquence, l'effort de tirage nécessaire pour introduire ces conducteurs dans le conduit. Toutefois, en raison du nombre important des portées sur la longueur du conduit continu, l'effort résistant au tirage s'avère encore trop élevé pour des fibres optiques ou des câbles de télécommunication.

Par ailleurs, lorsque les nervures internes sont raccordées par des nervures externes et forment un conduit annelé, celui-ci possède une grande possibilité de déformation transversale qui est préjudiciable à sa rectitude lorsqu'il est posé au fond d'une tranchée ou d'un tunnel. Il en résulte que ce conduit annelé zigzague sur le sol en créant des ondulations alternées qui augmentent inutilement la longueur et le frottement, et parfois même, perturbent le tirage des conducteurs.

Dans le document EP-A-0 221 481, la paroi intérieure du conduit de protection est munie de surélévations ou plots de contact, aptes à venir en contact avec les conducteurs, et ménageant entre eux un espace pour une réserve de lubrifiant.

La présente invention a pour objet de remédier à ces inconvénients en fournissant un conduit réduisant les efforts de frottement lors du tirage des conducteurs, et plus particulièrement de fibres optiques, et présentant une flexibilité transversale suffisante pour permettre son enroulement sur un touret, mais insuffisante pour affecter sa rectitude lors de sa pose en fouille.

A cet effet, dans le conduit selon l'invention, les portées de contact sont constituées par des plots espacés transversalement en rangées, elles-mêmes espacées longitudinalement des rangées voisines, les intervalles transversaux entre plots étant décalés angulairement pour ne pas coïncider avec les intervalles entre plots des rangées voisines.

Cet aménagement ne modifie en rien les conditions de pose des tronçons de conduit, mais, par contre, réduit considérablement la surface en contact avec les conducteurs lors du tirage de ceux-ci.

Il est évident que l'aménagement selon l'invention peut être appliqué aussi bien sur des tronçons de conduits rigides, fournis en longueur standard de l'ordre de 5 à 8 mètres, que sur des tronçons de conduits semi rigides fournis en rouleaux ayant une longueur développée de l'ordre de 100 à 200 mètres.

Avantageusement, les plots sont répartis par groupe sur un tronçon de conduit et deux tronçons successifs sont reliés par une nervure circulaire de section en "V" saillant à l'extérieur du conduit et constituant charnière de centrage du conduit.

Les nervures externes facilitent l'enroulement du conduit semi rigide sur un touret, mais, par leur espacement, n'influent pas sur la rigidité générale du conduit lorsqu'il est posé.

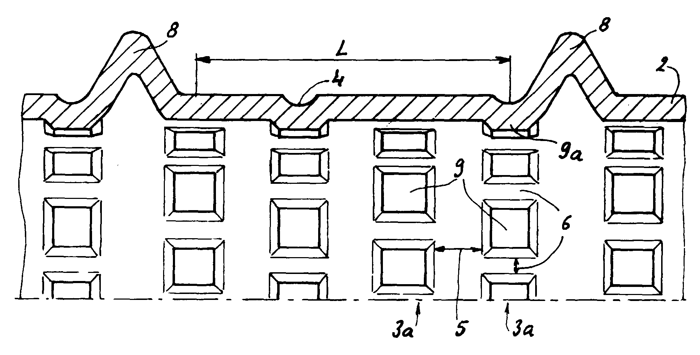

D'autres avantages ressortiront de la description qui suit en référence à l'unique figure annexée, représentant, partiellement et en coupe transversale, une forme d'exécution du conduit selon l'invention.

Le conduit 2, de type semi rigide, et pouvant être fourni en tronçons ayant une longueur de l'ordre de 6 mètres ou en bobineau de 200 mètres, comporte, en saillie de sa face interne, des plots 9. Ces plots sont répartis en rangées 3a, dans lesquelles ils sont séparés par des intervalles transversaux 6. Les rangées qui, ici, sont circulaires, peuvent aussi être formées par une spire d'hélice. Ces rangées 3a sont séparées longitudinalement par un intervalle 5.

A titre d'exemple, chaque plot a une section de contact, de forme carrée ou rectangulaire, dont la plus grande dimension est comprise entre 1 et 1,5 mm et les intervalles 5 et 6 ont des valeurs comprises entre 1,5 et 2,5 mm.

Les plots 9 sont réalisés au moyen de paires de mâchoires qui sont serrées sur une paraison tubulaire encore chaude, sortant de la filière annulaire d'une extrudeuse. En raison de ce mode de fabrication, le conduit comporte extérieurement des dépressions 4 qui n'affectent en rien sa résistance et qui ne gênent pas son engagement dans la tranchée ou dans le tunnel ménagé dans le sous sol.

Avantageusement, les intervalles transversaux 6 entre plots 9 sont décalés angulairement d'une rangée 3a à l'autre, et ont une valeur inférieure à celle diamétrale des conducteurs sous gaine, de manière à ne pas former de canaux longitudinaux pouvant favoriser le coincement de la gaine.

S'agissant d'un conduit semi rigide, les rangées 3a sont réparties sur des tronçons de longueur L, de l'ordre de 10 à 30 mm. Ces tronçons sont reliés les uns aux autres par des nervures circulaires externes 8 ayant, en section transversale, une forme en "V". Ces nervures 8 forment des charnières permettant aux différents tronçons de s'incliner les uns par rapport aux autres pour faciliter l'enroulement du conduit sur un bobineau, sans pour autant réduire sa rigidité longitudinale lorsqu'il est posé. En d'autres termes, les nervures ne favorisent pas la formation de zig-zig à la pose en fouille.

Dans une variante de réalisation, non représentée, les sommets des plots sont arrondis pour réduire encore la valeur de la surface pouvant venir en contact avec le conducteur.

Un autre avantage de ce conduit résulte de sa réalisation en polychlorure de vinyle, matière ne risquant pas de se lier avec le polyéthylène constituant la gaine de protection de certains conducteurs, gaine qui, lors de son tirage dans le conduit et sur une grande longueur, peut, par frottement, atteindre localement le point de fusion de sa matière constitutive.

Quelle que soit leur réalisation, les plots 9 réduisent considérablement la surface de contact entre le conduit et la gaine contenant les conducteurs et réduisent donc les forces de frottement, ce qui est particulièrement intéressant lorsque les conducteurs sont constitués par des fibres optiques ayant une fragilité plus grande que les conducteurs métalliques. Dans ces conditions, l'effort de tirage devant être exercer sur les fibres optiques est réduit, et ne risque pas d'endommager ou de sectionner ces fibres.

## Revendications

1. Conduit à friction réduite pour la protection de conducteurs enterrés du type réalisé en matière synthétique, et comportant, en saillie de sa face interne, des portées aptes à venir en contact avec les conducteurs ou faisceaux de fibres, **caractérisé en ce que** les portées de contact sont constituées par des plots (9) espacés transversalement en rangées (3a), elles-mêmes espacées longitudinalement des rangées voisines, les intervalles transversaux (6) entre plots (9) étant décalés angulairement pour ne pas coïncider avec les intervalles entre plots des rangées voisines.

2. Conduit selon la revendication 1, **caractérisé en ce que** les rangées (3a) de plots sont circulaires.

3. Conduit selon la revendication 1, **caractérisé en ce que** les rangées (3a) de plots sont en forme de spire.

4. Conduit selon l'une quelconque des revendications 1 à 3, **caractérisé en ce que** les plots (9) sont répartis par groupe sur un tronçon (L) de conduit et deux tronçons successifs sont reliés par une nervure circulaire (8) de section en "V" saillant à l'extérieur du conduit et constituant charnière de cintrage du conduit.

5. Conduit selon l'une quelconque des revendications 1 à 4, **caractérisé en ce que** chaque plot (9) a un sommet arrondi.

## Patentansprüche

1. Reibungsarmes Rohr für den Schutz von im Erdreich verlegten Leitungen aus synthetischem Material, das an seiner Innenfläche vorspringende Bereiche aufweist, die mit den Leitungen oder Faserbündeln in Kontakt kommen, **dadurch gekennzeichnet, daß** die Kontaktbereiche aus Flächen bestehen, die in Querschnittsrichtung beabstandet in Reihen (3a) angeordnet sind, wobei die Reihen selbst wiederum in Längsrichtung beabstandet in benachbarten Reihen liegen und wobei die Querzwischenräume (6) zwischen den Flächen (9) einen Winkelversatz zueinander aufweisen, um nicht mit den Zwischenräumen zwischen Flächen benachbarter Reihen übereinzustimmen.

2. Rohr nach Anspruch 1, **dadurch gekennzeichnet, daß** die Reihen (3a) der Flächen ringförmig sind.

3. Rohr nach Anspruch 1, **dadurch gekennzeichnet, daß** die Reihen (3a) der Flächen die Form einer Spirale aufweisen.

4. Rohr nach einem der Ansprüche 1 - 3, **dadurch gekennzeichnet, daß** die Flächen (9) gruppenweise auf einem Abschnitt (L) des Rohres verteilt sind und daß zwei aufeinanderfolgende Abschnitte durch eine umlaufende, im Querschnitt V-förmige Rippe (8) verbunden sind, die nach außen über das Rohr vorsteht und ein Biegeschamier des Rohres bildet.

5. Rohr nach einem der Ansprüche 1 - 4, **dadurch gekennzeichnet, daß** jede Fläche (9) eine gerundete Spitze aufweist.

## Claims

1. Conduit with reduced friction for protecting buried conductors of the type which is made of synthetic material and includes, projecting from its internal face, surfaces which are able to come into contact with the conductors or bundles of fibres, characterized in that the contact surfaces consist of pads (9) spaced transversely in rows (3a), themselves spaced longitudinally from the nearby rows, the transverse gaps (6) between pads (9) being offset angularly so that they do not coincide with the gaps between pads of the nearby rows.

2. Conduit according to Claim 1, characterized in that the rows (3a) of pads are circular.

3. Conduit according to Claim 1, characterized in that the rows (3a) of pads are in the form of a spiral.

4. Conduit according to any one of Claims 1 to 3, characterized in that the pads (9) are distributed in groups on the one length (L) of conduit and two successive lengths are joined together by a circular rib (8) with a V-shaped cross section projecting on the outside of the conduit and constituting a hinge about which the conduit can curve.

5. Conduit according to any one of Claims 1 to 4, characterized in that each pad (9) has a rounded top.
